# EUROPEAN PATENT APPLICATION

(11) **EP 4 578 829 A1**
(43) Date of publication of application: **02.07.2025**
(21) Application number: 23904020.7
(22) Date of filing: 14.12.2023
(51) Int. Cl.: C01B 32/312, C01B 32/336, H01M 4/583, H01M 4/58, H01M 10/0525, H01M 4/02

(54) **POROUS CARBON MATERIAL, METHOD FOR MANUFACTURING SAME, POSITIVE ELECTRODE FOR LITHIUM SECONDARY BATTERY COMPRISING SAME CARBON MATERIAL AS POSITIVE ELECTRODE ACTIVE MATERIAL, AND LITHIUM SECONDARY BATTERY**

(30) Priority: 16.12.2022 KR 20220176685
(71) Applicant: LG Energy Solution, Ltd., Seoul 07335 (KR)
(72) Inventor: SONG, Myeongjun, Daejeon 34122 (KR); PARK, Intae, Daejeon 34122 (KR); KIM, Ilto, Daejeon 34122 (KR); YANG, Seungbo, Daejeon 34122 (KR)
(74) Representative: Goddar, Heinz J.
(86) International application number: PCT/KR2023/020616
(87) International publication number: WO 2024/128821

(57) **Abstract**

Disclosed are a porous carbon material, a method for fabricating the same, a positive electrode for a lithium secondary battery comprising the same as a positive-electrode active material, and a lithium secondary battery, wherein the performance of a sparingly solvating electrolyte based lithium secondary battery can be improved by applying the porous carbon material having an increased pore volume and specific surface area through an activation process to the positive electrode. The porous carbon material has a specific surface area of 1,700 m²/g or more, and a pore volume of 5 cm³/g or more.

## Description

### [Technical Field]

The present application claims benefit of the priority of Korean Patent Application No. 10-2022-0176685, filed December 16, 2022, the disclosure of which is incorporated herein by reference in its entirety.

The present invention relates to a porous carbon material, a method for fabricating the same, a positive electrode for a lithium secondary battery including the carbon material as a positive-electrode active material, and the lithium secondary battery itself. More specifically, it pertains to a porous carbon material whose pore volume and specific surface area are increased through an activation process, a fabrication method for the same, and a positive electrode for a lithium secondary battery that includes the carbon material as a positive-electrode active material. By applying this porous carbon material to the positive electrode, it is possible to improve the performance of sparingly solvating electrolyte-based (SSE-based) lithium secondary batteries.

### [Background Art]

The growing interest in energy storage technologies, with applications ranging from cell phones, tablets, laptops and camcorders to energy for electric vehicles (EVs) and hybrid electric vehicles (HEVs), has led to an increasing amount of research and development in electrochemical devices. The development of lithium-based secondary batteries, such as lithium-sulfur batteries that can be charged and discharged, has been the focus of attention, and in recent years, the development of such batteries has led to research and development of new electrode and battery designs to improve the capacity density and specific energy.

These lithium-based secondary batteries, especially lithium-sulfur batteries, have high energy density (or theoretical capacity) and are becoming the next generation of secondary batteries that can replace lithium ion batteries. **In** such a lithium-sulfur battery, the reduction reaction of sulfur and the oxidation reaction of lithium metal occur during discharge, and the sulfur forms a linear structure of lithium polysulfide (LiPS) from the ring structure of S₈, and such a lithium-sulfur battery is characterized by a step-discharge voltage until the polysulfide is completely reduced to Li₂S.

However, the main obstacle to the commercialization of lithium-sulfur batteries is their lifespan, which decreases during the charging and discharging process. The causes of this degradation include side reactions in the electrolyte (deposition of by-products due to electrolyte degradation), instability of the lithium metal (dendrite growth on the lithium negative electrode, causing shorts), and deposition of positive electrode by-products (lithium polysulfide leaching from the positive electrode).

In other words, in batteries that use sulfur-based compounds as positive-electrode active materials and alkali metals such as lithium as negative-electrode active materials, lithium polysulfide leaching and shuttle phenomena occur during charge and discharge, and lithium polysulfide is transferred to the negative electrode, which reduces the capacity of the lithium-sulfur battery, thereby reducing the life of the battery and reducing its reactivity. In other words, the polysulfide eluted from the positive electrode has a high solubility in organic electrolyte, which can cause unwanted migration (PS shuttling) through the electrolyte to the negative electrode, resulting in a decrease in capacity due to irreversible loss of positive-electrode active material and a decrease in battery life due to sulfur particle deposition on the lithium metal surface by side reactions.

Meanwhile, for lithium-sulfur batteries to achieve high energy densities of 400 Wh/kg or more, or 600 Wh/L or more, they require an electrolyte and a positive-electrode active material system that can operate under high loading conditions (about 4.0 mAh/cm² or more) and low porosity (about 60% or less). The behavior of such lithium-sulfur batteries can significantly vary depending on the electrolyte. The electrolyte in which sulfur from the positive electrode is leached out in the form of lithium polysulfides (LiPS) is referred to as catholyte. Conversely, an electrolyte in which sulfur is scarcely leached out in the form of lithium polysulfides is called a Sparingly Solvating Electrolyte (SSE). Traditional lithium-sulfur batteries utilizing the catholyte system rely on a liquid-phase reaction through the formation of intermediate polysulfides in the form of Li₂Sₓ (catholyte type). As a result, they fail to fully utilize the high theoretical discharge capacity of sulfur (1,675 mAh/g), and the leaching of polysulfides further leads to rapid degradation and shortened lifespan of the battery.

On the other hand, in recent years, sparingly solvating electrolyte (SSE) electrolyte systems have been developed that can inhibit the leaching of polysulfides, confirming that more than 80% of the theoretical discharge capacity of sulfur can be utilized when carbon materials with high BET specific surface area are used as sulfur carriers. However, the high specific surface area of the carbon material used as a carrier for sulfur does not necessarily lead to high discharge capacity. In particular, in the case of high sulfur content (e.g., >70 wt%), in addition to the specific surface area of the carbon material, the pore volume of the carbon material also has a significant impact on the utilization of sulfur. For the realization of cells with high energy density (e.g., >400 Wh/kg), the use of high-loading electrodes with high sulfur content positive-electrode active materials is essential, and thus, optimization by controlling the specific surface area and porosity of the carbon material is essential.

Therefore, it is necessary to find a battery with a high sulfur utilization rate even under high sulfur content conditions by applying carbon materials for positive-electrode active materials with increased specific surface area and pore volume than conventional ones, while basically using the SSE electrolyte system.

### [Disclosure]

### [Technical Problems]

Therefore, the object of the present invention is to provide a porous carbon material whose pore volume and specific surface area are increased through an activation process, a method for fabricating such carbon material, and a positive electrode for a lithium secondary battery that includes the carbon material as a positive-electrode active material, as well as the lithium secondary battery itself. This aims to improve the performance of sparingly solvating electrolyte-based (SSE) lithium secondary batteries by applying the enhanced porous carbon material to the positive electrode.

### [Technical Solutions]

To achieve the aforementioned objects, the present invention provides a porous carbon material having a specific surface area of 1,700 m²/g or more and a pore volume of 5 cm³/g or more.

The present invention also provides a method for fabricating the porous carbon material, comprising a step of: physically activating the carbon material with a gas activator, or chemically activating the carbon material with a chemical activator.

Additionally, the present invention provides a positive electrode for a lithium secondary battery, comprising: the sulfur-carbon composite, wherein the sulfur is retained in the porous carbon material as the positive-electrode active material.

Additionally, the present invention provides a lithium secondary battery, comprising: the positive electrode for a lithium secondary battery; a negative electrode; a separator interposed therebetween; and an electrolyte comprising a first solvent comprising a fluorinated ether compound, a second solvent comprising a glyme-based compound, and a lithium salt.

### [Advantageous Effects]

According to the present invention, the porous carbon material, its fabrication method, the positive electrode for a lithium secondary battery that includes this carbon material as a positive-electrode active material, and the lithium secondary battery itself, offer the advantage of improving the performance of sparingly solvating electrolyte-based (SSE) lithium secondary batteries. This is achieved by applying the porous carbon material, whose pore volume and specific surface area have been increased through an activation process, to the positive electrode.

### [Brief Description of Drawings]

FIG. 1 is a nitrogen adsorption/desorption isotherm used to determine the specific surface area of a porous carbon material according to an example of the present invention and a comparative example.
FIG. 2 is a pore size distribution diagram (BJH plot, mesopore/macropore analysis) used to determine the pore size of a porous carbon material according to an example of the present invention and a comparative example.
FIG. 3 is a pore size distribution diagram (HK plot, micropore analysis) used to determine the pore size of a porous carbon material according to an example of the present invention and a comparative example.
FIG. 4 is a thermogravimetric analysis (TGA) graph of a sulfur-carbon composite according to an example of the present invention and a comparative example.
FIG. 5 is a graph showing the discharge capacity of a lithium secondary battery according to an example of the present invention and a comparative example.
FIG. 6 is a graph showing the discharge capacity and life characteristics of a lithium secondary battery according to an example of the present invention and a comparative example.

### [Best Mode]

Hereinafter, the present invention will be described in detail.

The porous carbon material according to the present invention has a specific surface area of 1,700 m²/g or more and a pore volume of 5 cm³/g or more.

In order for a lithium-sulfur battery to achieve a high energy density of about 400 Wh/kg or more or 600 Wh/L or more, an electrolyte and positive-electrode active material system that can be operated under high loading (about 4.0 mAh/cm² or more) and low porosity (about 60% or less) conditions is required. Moreover, in this electrolyte system, a sparingly solvating electrolyte (SSE) system has been developed to address the issues associated with catholyte, where sulfur from the positive electrode leaches out into the electrolyte in the form of lithium polysulfides (LiPS), namely by suppressing the leaching of polysulfides. Additionally, by applying carbon material with a high BET (Brunauer-Emmett-Teller) specific surface area as a carrier for sulfur in the positive-electrode active material and integrating it with the SSE electrolyte system, it was confirmed that 80% or more of sulfur's theoretical discharge capacity can be utilized (this means that the sulfur utilization rate is 80% or more, where "sulfur utilization rate' refers to the ratio of the discharge capacity (mAh) per gram of sulfur in the positive electrode of the battery relative to the theoretical capacity of sulfur, which is 1,675 mAh/g. For example, if the discharge capacity per gram of sulfur in the lithium-sulfur battery's positive electrode is 1,600 mAh/g, then the sulfur utilization rate is 95.5% (1,600/1,675).

However, a large specific surface area of a carbon material used as a sulfur carrier does not necessarily indicate a high discharge capacity. **In** particular, in the case of high sulfur content (e.g., >70 wt%), in addition to the specific surface area of the carbon material, the pore volume of the carbon material also has a significant impact on the utilization of sulfur. Therefore, even if the specific surface area of the carbon material is large, if the pore volume is small, there are not enough pores to hold the sulfur, resulting in low sulfur holding efficiency, which lowers the electron acceptance of the sulfur which is non-conductive, which increases the proportion of sulfur participating in the reaction, which greatly reduces the discharge capacity and life characteristics of the battery. **In** other words, in order to realize a cell with a high energy density (e.g., >400 Wh/kg), it is essential to use a high-loading electrode by applying a positive-electrode active material with a high sulfur content, and optimization by controlling the specific surface area and porosity of the carbon material is essential. Accordingly, the applicant has invented a carbon material for positive-electrode active material, which has an increased specific surface area and pore volume compared to the existing ones, and has also combined it with an SSE electrolyte system to improve the performance of the battery.

The porous carbon material of the present invention, having a specific surface area of 1,700 m²/g or more and a pore volume of 5 cm³/g or more, is a porous carbon material treated with an activator and used as a positive-electrode active material in a lithium secondary battery with a sparingly soluble electrolyte (SSE) electrolyte system.

In other words, while existing methods use carbonized porous carbon materials, carbonizing such materials leads to the removal of organic substances other than carbon (C), which makes it difficult to create additional micro-pores in the porous carbon material. However, the present invention is to form micropores by physically activating the porous carbon material with a gas activator or chemically activating it with a chemical activator, so that the carbon in the solid phase is gasified while the carbon reacts with the gas or chemical. However, the present invention is characterized in that no further carbonization process is carried out during the physical activation or chemical activation. Thus, the porous carbon material of the present invention is one that has been activated with an activator, but no additional carbonization process (or treatment) is performed during the activation process (or treatment).

Furthermore, the porous carbon material of the present invention shows its greatest effect when used as the positive-electrode active material in lithium secondary batteries applied with an SSE (sparingly solvating electrolyte) electrolyte system, and it can utilize more than 80% of the theoretical discharge capacity of sulfur. Therefore, the porous carbon material of the present invention can maximize the performance of the battery when used as the positive-electrode active material in lithium secondary batteries applied with an SSE electrolyte system, rather than in lithium secondary batteries with a conventional electrolyte (Catholyte). In other words, the porous carbon material is characterized for use as the positive-electrode active material in lithium secondary batteries, which include an electrolyte containing a first solvent comprising a fluorine-based ether compound, a second solvent comprising a glyme-based compound and a lithium salt.

The porous carbon material of the present invention has a specific surface area of 1,700 m²/g or more. If the porous carbon material has a specific surface area of less than 1,700 m²/g, the sulfur retention efficiency is low and the electrode side reaction is large, resulting in a charging overvoltage phenomenon, which greatly reduces the discharge capacity and life characteristics of the battery.

Furthermore, the porous carbon material of the present invention has a pore volume of 5 cm³/g or more, preferably 7 cm³/g or more, more preferably 7 to 10 cm³/g. If the porous carbon material has a pore volume of less than 5 cm³/g, the sulfur retention efficiency is reduced (i.e., the amount of sulfur retained is reduced), and this may cause a problem that the electron acceptance capacity of the sulfur which is non-conductive is reduced and the proportion of sulfur participating in the reaction is increased, thereby significantly reducing the discharge capacity and life characteristics of the battery. Thus, if the porous carbon material has a pore volume of 7 cm³/g or more, the performance of the battery can be improved compared to the porous carbon material having a pore volume of less than 7 cm³/g. On the other hand, although the present invention focuses on the application of porous carbon materials to batteries, it will be apparent that the present invention can be used in other fields requiring porous carbon materials other than batteries.

As described above, the porous carbon material of the present invention having a specific surface area of 1,700 m²/g or more and a pore volume of 5 cm³/g or more may be, for example, carbon nanotubes; graphene (in particular, multilayer graphene flake, MGF); graphite; carbon black, such as carbon black, acetylene black, Ketjen black, denka black, thermal black, channel black, furnace black, lamp black, etc.; carbon fiber; or a mixture containing two or more of the foregoing. Furthermore, among these, Ketjen black having a specific surface area of 1,700 m²/g or more and a pore volume of 5 cm³/g or more may be most advantageous in terms of improving the performance of the battery.

Hereinafter, a method for fabricating the porous carbon material described above will be described. The method for fabricating the porous carbon material, which is the method for fabricating the porous carbon material, comprises the steps of: physically activating the carbon material with a gas activator or chemically activating the carbon material with a chemical activator. Furthermore, the method is characterized in that no further carbonization process is performed during the physical activation or chemical activation.

The carbon material may be any one of carbon nanotubes; graphene (in particular, multilayer graphene flake, MGF); graphite; carbon black, such as carbon black, acetylene black, Ketjen black, denka black, thermal black, channel black, furnace black, lamp black, etc.; carbon fiber; and mixtures comprising two or more of the foregoing. Furthermore, the activated carbon material may be a carbon material that has not undergone any carbonization treatment other than the activation treatment, i.e., no additional carbonization process is performed during the physical or chemical activation, and no carbonization process is performed before or after the activation.

In the past, carbon materials that were only carbonized have been used, and since carbonization removes only organic matter except carbon (C), it is difficult to form additional micropores in the carbon material. However, if the carbon material is physically activated with a gas activator or chemically activated with a chemical activator, it is possible to form additional micropores in the carbon material through the process of gasification of the solid carbon while the carbon material reacts with the gas or chemical.

Thus, the method for fabricating the porous carbon material of the present invention comprises the step of: activating the carbon material using an activator, in which no further carbonization process is performed during the physical activation or chemical activation, and no carbonization process is performed before or after the activation treatment (physical activation or chemical activation).

Hereinafter, the physical activation method and the chemical activation method will be explained in detail. First, the physical activation method is a method for an activation under high temperature using a gas activator (or activation gas). Examples of such gas activators include water vapor (steam), carbon monoxide (CO), carbon dioxide (CO₂), and oxygen (O₂). In the case of the above physical activation method, the activation temperature may be 500 to 1,000 °C, preferably 800 to 1,000 °C. Furthermore, the activation time in that case may be from 1 to 10 hours, preferably from 3 to 10 hours. If the above activation temperature and time range is exceeded, micropores may not be formed normally in the carbon material.

The above chemical activation method is a method for activation under high temperature using a chemical activator, and when the chemical activator is deposited on the carbon material and heated, a dehydration and oxidation reaction of the chemical is carried out, and micropores can be formed in the porous carbon material. Examples of such chemical activators include KOH, K₂CO₃, NaOH, Na₂CO₃, AlCl₃, MgCl₃, and H₃PO₄, which are compounds with strong dehydrating and oxidizing properties. The porous carbon material can be purged with an inert gas such as nitrogen (N₂), argon, or the like prior to the chemical activation, and there is no particular restriction on the inert gas injection conditions. Further, a sealed container may be used for the chemical activation, and such a sealed container may be a glass jar or other conventional container that can be sealed and purged even if an inert gas is injected.

The deposition ratio of the carbon material and the chemical activator prior to the activation may be from 1 : 8 to 1 : 1 by weight. In the case of the above chemical activation method, the activation temperature may be 400 to 1,000 °C, preferably 500 to 900 °C. And the activation time may be from 1 to 10 hours, preferably from 1 to 5 hours. If the above activation temperature and time range is exceeded, micropores may not be formed normally in the porous carbon material.

Continuing, the present invention is described in terms of the positive electrode for a lithium secondary battery. The positive electrode for the lithium secondary battery includes a sulfur-carbon composite ((C₂Sₓ)ₙ: x=2.5 to 50, n≥2) where sulfur is retained on the previously described porous carbon material as the positive-electrode active material. Additionally, the positive electrode for the lithium secondary battery contains, apart from the positive-electrode active material, a binder and a conductive material. The sulfur may be elemental sulfur (S₈), a sulfur-based compound, or a mixture of these, and the sulfur-based compound may specifically be Li₂Sₙ (n≥1) or an organic sulfur compound.

The particle size of the sulfur-carbon composite can be between 1 and 100 µm. If the particle size of the sulfur-carbon composite is less than 1 µm, the resistance between particles can increase, potentially causing overvoltage in the electrode of the lithium-sulfur battery. If it exceeds 100 µm, the surface area per unit weight decreases, which reduces the wetting area with the electrolyte and the reaction sites with lithium ions in the electrode. Additionally, as the amount of electron transfer relative to the size of the composite becomes less, the reaction slows down, potentially leading to a decrease in the discharge capacity of the battery.

The sulfur (S) contained in the positive electrode may be included in a content of from 60 to 90 wt%, preferably from 65 to 85 wt%, more preferably from 70 to 80 wt%, based on the total weight of the positive electrode. If the sulfur is used in a content of less than 60 wt% by weight of the total weight of the positive electrode, a decrease in the energy density of the battery may occur, and if it is used in a content of more than 90 wt% by weight, a decrease in the conductivity of the electrode and a decrease in the stability of the electrode may occur.

The positive-electrode active material comprising the above sulfur and carbon materials may comprise 80 to 99 parts by weight, preferably 90 to 95 parts by weight, relative to a total weight of 100 parts by weight of the positive electrode. If the content of the positive-electrode active material is less than 80 parts per 100 parts of the total weight of the positive electrode, the energy density of the battery may be reduced, and if it exceeds 99 parts per 100 parts, the conductivity in the electrode may be reduced and the stability of the electrode may be reduced.

The binder included in the positive electrode assists in binding the positive-electrode active material and the conductive material, as well as in binding to the collector. Examples of binders can include polyvinylidene fluoride (PVdF), a copolymer of polyvinylidene fluoride and polyhexafluoropropylene (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethyl cellulose (CMC), starch, hydroxypropyl cellulose, regenerated cellulose, and their mixtures. However, the use of these materials is not limited to these examples.

The binder is typically added in an amount of 1 to 50 parts by weight, preferably 3 to 15 parts by weight, based on a total weight of 100 parts by weight of the positive electrode. A content of less than 1 part by weight of the binder may result in insufficient adhesion of the positive-electrode active material to the collector, and a content of more than 50 parts by weight may result in improved adhesion but a corresponding decrease in the positive-electrode active material, resulting in a lower battery capacity.

The conductive material included in the positive electrode is not particularly limited as long as it does not cause side reactions or chemical changes in the battery environment while possessing excellent electrical conductivity. Typically, graphite or conductive carbon can be used. Examples include natural graphite, artificial graphite, carbon black such as carbon black, acetylene black, Ketjen black, denka black, thermal black, channel black, furnace black, lamp black, carbonaceous materials with crystal structures of graphene or graphite, carbon nanotubes, conductive fibers such as carbon fiber and metal fiber, fluorinated carbon, metal powders like aluminum powder and nickel powder, conductive whiskeys such as zinc oxide and potassium titanate, conductive oxides like titanium oxide, and conductive polymers such as polypphenylene derivatives. These can be used alone or in a combination of two or more, but the use is not limited to these examples.

The conductive material may be added in an amount of 0.5 to 10 parts by weight, preferably 0.5 to 5 parts by weight, based on 100 parts by weight of the total weight of the positive electrode, but may not be included in the positive electrode of the present invention. If the content of the conductive material is too much, exceeding 10 parts by weight based on 100 parts by weight of the total weight of the positive electrode, the amount of positive-electrode active material may be relatively small, resulting in a decrease in capacity and energy density. The method for incorporating the conductive material into the positive electrode is not specifically limited, and any method known in the art can be used, such as coating the positive-electrode active material. Also, if desired, the addition of a conductive second covering layer to the positive-electrode active material may be substituted for the addition of the conductive material described above.

In addition, a filler may optionally be added to the positive electrode of the present invention as a component to inhibit its expansion. Such a filler is not particularly limited as long as it is capable of suppressing the expansion of the electrode without causing chemical changes in the battery, for example, oligopolymers such as polyethylene and polypropylene; fibrous materials such as glass fiber and carbon fiber; and the like can be used.

The positive electrode can be fabricated by dispersing and mixing a positive-electrode active material, a binder, and a conductive material in a dispersant (solvent) to form a slurry, which is applied to a positive electrode collector, and then dried and rolled. The dispersant may include, although not necessarily limited thereto, N-methyl-2-pyrrolidone (NMP), dimethyl formamide (DMF), dimethyl sulfoxide (DMSO), ethanol, isopropanol, water, and mixtures thereof.

For the collector of the positive electrode, materials such as platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (indium-doped SnO₂), FTO (fluorine-doped SnO₂), and their alloys can be used. Additionally, aluminum (Al) or stainless steel which is surface treated with carbon (C), nickel (Ni), titanium (Ti), or silver (Ag) may also be used, but the selection is not limited to these materials. The form of the positive electrode collector can be in the form of foil, film, sheet, punched, porous, foam, and so on.

Finally, the lithium secondary battery according to the present invention is described. The lithium secondary battery includes the positive electrode for the lithium secondary battery, the negative electrode, a separator interposed between them, and an electrolyte containing a lithium salt, a first solvent including a fluorine-based ether compound, and a second solvent including a glyme-based compound, as described above. Furthermore, when sulfur is included in the positive electrode for the lithium secondary battery, the lithium secondary battery is a lithium-sulfur battery.

The lithium secondary battery of the present invention comprises a sparingly soluble electrolyte (SSE) and a porous carbon material having a specific surface area of 1,700 m²/g or more and a pore volume of 5 cm³/g or more as a positive-electrode active material, such that the utilization rate of sulfur can be 80% or more, preferably 85% or more, of the theoretical discharge capacity, while having a high energy density of about 400 Wh/kg or more, or 600 Wh/L or more.

Hereinafter, the first solvent comprising a fluorine-based ether compound, the second solvent comprising a glyme-based compound, and a lithium salt included in the electrolyte of a lithium secondary battery according to the present invention will be described in detail.

The first solvent is an electrolyte solvent comprising a fluorinated ether compound, which has the effect of dissolving polysulfides and inhibiting solvent decomposition, thereby improving the coulombic efficiency (C.E.) of the battery and ultimately improving the life of the battery. More specifically, the first solvent comprising the above-mentioned fluorinated ether compounds is highly stable due to the excellent structural stability of the solvent compared to general organic solvents containing alkanes due to fluorine substitution. Accordingly, using it in the electrolyte of a lithium secondary battery can greatly improve the stability of the electrolyte, thereby improving the life performance of the lithium secondary battery.

Examples of fluorine-based ether compounds include one or more hydrofluoroether (HFE) type compounds selected from a group consisting of 1,1,2,2-tetrafluoroethyl 2,2,3,3-tetrafluoropropyl ether (TTE), bis(fluoromethyl)ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethylisobutyl ether, 1,1,2,3,3,3-hexafluoropropyl ethyl ether, 1H,1H,2'H,3H-decafluorodipropyl ether, and 1H,1H,2'H-perfluorodipropyl ether.

The second solvent, which includes a glyme-based compound (but does not contain fluorine), serves as an electrolyte solvent. It not only dissolves lithium salt to provide the electrolyte with lithium ion conductivity but also plays a role in leaching sulfur, the positive-electrode active material, to facilitate the electrochemical reaction with lithium.

Specific examples of glyme-based compounds include one or more selected from a group consisting of: dimethoxyethane, diethoxyethane, methoxyethoxyethane, diglyme (diethylene glycol dimethyl ether), diethylene glycol diethyl ether, diethylene glycol methyl ethyl ether, triglyme (triethylene glycol dimethyl ether), triethylene glycol diethyl ether, triethylene glycol methyl ethyl ether, tetraglyme (tetraethylene glycol dimethyl ether), tetraethylene glycol diethyl ether, tetraethylene glycol methyl ethyl ether, polyethylene glycol dimethyl ether, polyethylene glycol diethyl ether, and polyethylene glycol methyl ethyl ether. This list is not exhaustive, and among these, the use of dimethoxyethane may be preferable.

The lithium salt, used as the electrolyte salt to increase ionic conductivity, can be any commonly used in the industry without restriction. Specific examples of the lithium salts include one or more selected from a group consisting of: LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, chloroborane lithium, lithium salts of lower aliphatic carboxylic acids with less than 4 carbon atoms, lithium tetraphenyl borate, and lithium imide.

The concentration of the lithium salt may be determined by considering the ionic conductivity or the like, and may be, for example, 0.1 to 2 M, preferably 0.5 to 1 M, more preferably 0.5 to 0.75 M, or the like. If the concentration of the lithium salt is less than the above range, it may be difficult to secure an ionic conductivity suitable for driving the battery, and if it exceeds the above range, the viscosity of the electrolyte may increase, thereby reducing the mobility of the lithium ions, or the decomposition reaction of the lithium salt itself may increase, thereby reducing the performance of the battery.

In an electrolyte comprising a first solvent, a second solvent and a lithium salt as described above, the molar ratio of the lithium salt, second solvent and first solvent may be 1 : 0.5 to 3 : 4.1 to 15. Furthermore, in an example of the present invention, the molar ratio of the lithium salt, the second solvent, and the first solvent may be 1 : 2 : 4 to 13 or 1 : 3 : 3 to 10 or 1 : 4 : 5 to 10, such that in the electrolyte included in the lithium secondary battery of the present invention, the first solvent comprising a fluorinated ether compound may be included in a higher content ratio compared to the second solvent comprising a glyme-based compound. In this way, when the first solvent comprising the fluorinated ether compound is included in a higher content ratio than the second solvent comprising the glyme-based compound, it is advantageous in terms of suppressing the generation of polysulfides, enabling the realization of a battery capacity close to the theoretical capacity of the sulfur, and suppressing the decrease in the battery capacity with the use of the battery. Thus, it is preferable that the first solvent comprising the fluorinated ether compound is included in a higher content ratio than the second solvent comprising the glyme-based compound.

The negative electrode included in the lithium secondary battery of the present invention is a lithium-based metal, and may further include a negative electrode collector on one side of the lithium-based metal. The negative electrode collector may be selected from a group consisting of, without limitation, copper, aluminum, stainless steel, zinc, titanium, silver, palladium, nickel, iron, chromium, alloys thereof, and combinations thereof, provided that it has a high conductivity without causing chemical changes in the battery. The stainless steel may be surface treated with carbon, nickel, titanium or silver. As the alloy, an aluminum-cadmium alloy may be used, as well as calcined carbon, a non-conductive polymer surface treated with a conductive material, or a conductive polymer. Typically, copper foil is used as the negative electrode collector.

Further, the form may be in the form of a film, sheet, foil, net, porous body, foam, nonwoven body, or the like, having microscopic irregularities formed/unformed on its surface. Furthermore, the negative electrode collector may have a thickness in the range of 3 to 50 µm*.* If the thickness of the negative electrode collector is less than 3 µm, the collecting effect is reduced, and if the thickness exceeds 50 µm, the processability is reduced when the cell is assembled by folding.

The lithium-based metal may be lithium or a lithium alloy. A lithium alloy may comprise an element capable of being alloyed with lithium, specifically an alloy of lithium with one or more species selected from a group consisting of: Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

The lithium-based metal may be in the form of a sheet or foil, and in some cases the lithium or lithium alloy on the collector may be deposited or coated by a dry process, or the metal and alloy on the particles may be deposited or coated by a wet process, for example.

A conventional separator can be interposed between the positive and negative electrodes. This separator is a physical barrier that serves to physically separate the electrodes. It can be any typically used separator without special restrictions, and it is particularly desirable to have low resistance to ion movement of the electrolyte and excellent electrolyte wettability.

Further, the separator enables transportation of lithium ions between the positive and negative electrodes while separating or insulating the positive and negative electrodes from each other. Such a separator may be made of a porous, non-conductive or insulating material. The separator may be an independent member, such as a film, or a coating layer added to the positive electrode and/or the negative electrode.

Examples of polyolefin-based porous membranes that can be used as the separator include membranes formed from polyethylene, such as high-density polyethylene, linear low-density polyethylene, low-density polyethylene, ultra-high molecular weight polyethylene; and polyolefin-based polymers, such as polypropylene, polybutylene, polypentene, each alone or in combination thereof. Examples of nonwoven fabrics that can be used as the separator are polyphenyleneoxide, polyimide, polyamide, and polycarbonate, polyethyleneterephthalate, polyethylenenaphthalate, polybutyleneterephthalate, and polyphenylenesulfide, polyacetal, polyethersulfone, polyetheretherketone, polyester, and the like, either alone or in combination thereof, and such nonwoven fabrics may be in the form of fibers forming a porous web, including spunbond or meltblown forms comprising long fibers.

The thickness of the separator is not particularly limited, but is preferably in the range of 1 to 100 µm, and more preferably in the range of 5 to 50 µm. If the thickness of the separator is less than 1 µm, the mechanical properties cannot be maintained, and if it exceeds 100 µm, the separator acts as a resistive layer and the performance of the battery is reduced. The pore size and porosity of the separator are not particularly limited, but the pore size is preferably 0.1 to 50 µm and the porosity is preferably 10 to 95%. When the pore size of the separator is less than 0.1 µm or the porosity is less than 10%, the separator acts as a resistive layer, and when the pore size exceeds 50 µm or the porosity exceeds 95%, the mechanical properties cannot be maintained.

The lithium secondary battery of the present invention, comprising the positive electrode, the negative electrode, the separator, and the electrolyte as described above, can be fabricated by a process in which the positive electrode is faced with the negative electrode, the separator is interposed therebetween, and the electrolyte is injected.

Meanwhile, the lithium secondary battery according to the present invention can be applied to a battery cell used as a power source for a small device, as well as being particularly suitable as a unit battery in a battery module that is a power source for a medium or large device. In this respect, the present invention also provides a battery module comprising two or more lithium secondary batteries electrically connected (in series or in parallel). Of course, the quantity of lithium secondary batteries included in the battery module may be varied in consideration of the use and capacity of the battery module. Furthermore, the present invention provides a battery pack electrically connected to the battery module in accordance with the conventional techniques in the field. The battery module and battery pack may be used to power one or more medium to large devices, including, but not necessarily limited to, a power tool; an electric vehicle, including an electric vehicle (EV), a hybrid electric vehicle (HEV), and a plug-in hybrid electric vehicle (PHEV); an electric truck; an electric commercial vehicle; or a power storage system. However, it may be preferred that the lithium secondary battery of the present invention is a battery for an aircraft utilized for Urban Air Mobility (UAM).

Examples of the present invention will described below for the purpose of illustrating the present invention, but it will be apparent to those skilled in the art that various changes and modifications are possible within the scope of the present invention and the technical idea, and that such changes and modifications fall within the scope of the appended patent claims.

### [Example 1] Fabrication of Porous Carbon Material

20 g of Ketjen black was placed in a quartz tube using a fluidized bed reactor, purged with nitrogen gas for 1 min, and then activated with CO₂ gas at a temperature of 900 °C for 5 hours.

### [Comparative Example 1] Porous Carbon Material

The same Ketjen black used in Example 1 was prepared, but was not subjected to an activation treatment.

### [Experimental Example 1] Evaluation of Specific Surface Area and Pore Volume of Porous Carbon Materials

Specific surface area and pore volume were measured for each of the porous carbon materials of Example 1 and Comparative Example 1, and the results are shown in Table 1 below. A porosity analyzer (model name: Belsorp-max, manufacturer: Bel Japan) was used for the measurements, and the specific surface area and pore volume values were derived from the nitrogen adsorption/desorption isotherms at 77K.

**[Table 1]**

| | BET specific surface area (m²/g) | Pore volume (cm³/g) |
|---|---|---|
| Example 1 | 1,771 | 7.0864 |
| Comparative Example 1 | 1,350 | 3.7219 |

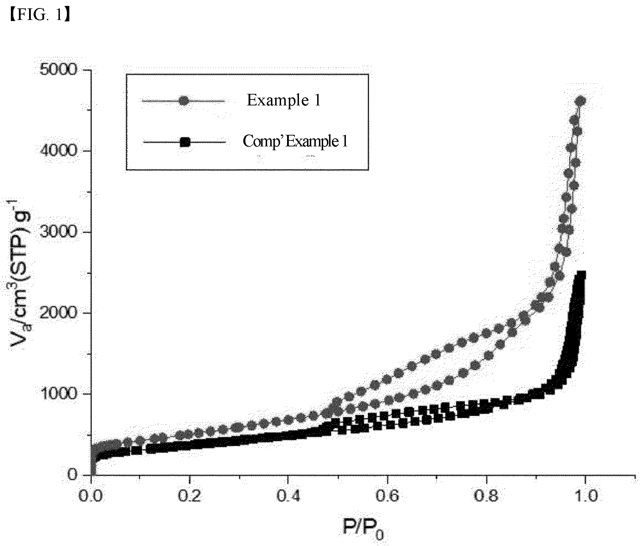

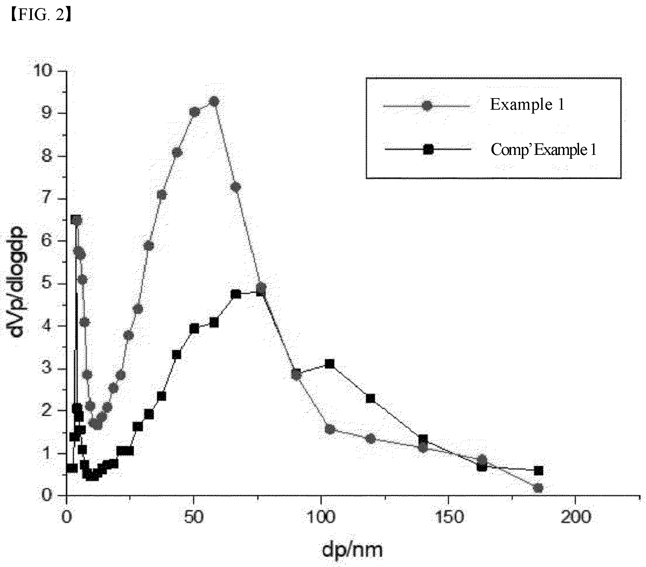

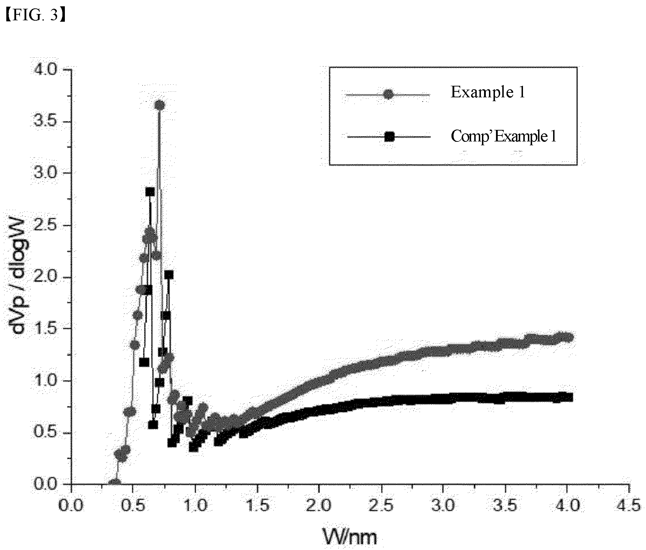

FIG. 1 is a nitrogen adsorption/desorption isotherm used to determine the specific surface area of the porous carbon material according to the example of the present invention and the comparative example; FIG. 2 is a pore size distribution plot used to determine the pore size of a porous carbon material according to the example of the present invention and the comparative example (BJH plot, mesopore/macropore analysis), and FIG. 3 is a pore size distribution plot (HK plot, micropore analysis) used to determine the pore size of a porous carbon material according to the example of the present invention and the comparative example. As a result of measuring the specific surface area and pore volume for each of the porous carbon materials of Example 1 and Comparative Example 1, as shown in Table 1 and illustrated in FIGS. 1 to 3, it can be seen that both the specific surface area and pore volume of the activation-treated porous carbon material of Example 1 are significantly increased compared to the porous carbon material of Comparative Example 1 without activation treatment.

### [Experimental Example 2] Measurement of Tap Density of Porous Carbon Material

Tap density was measured for each of the porous carbon materials of Example 1 and Comparative Example 1, and the results are shown in Table 2 below. A tap density tester (model name: KYT-5000K, fabricate: SEISHIN), and the results of 1,000 taps of 100 ml samples are shown below.

**[Table 2]**

| | Tap density (g/cc) |
|---|---|
| Example 1 | 0.044 |
| Comparative Example 1 | 0.062 |

As shown above, the tap density was measured for each of the porous carbon materials of Example 1 and Comparative Example 1. As shown in Table 2, the porous carbon material of Example 1, which was activated, exhibited a lower tap density than the porous carbon material of Comparative Example 1, which was not activated. Thus, the benefit of activating the carbon material can be seen.

### [Example 2, Comparative Example 2] Fabrication of Sulfur-carbon Composite

To ensure that the sulfur is contained in each of the porous carbon materials of Example 1 and Comparative Example 1, the sulfur and the porous carbon materials were mixed in a weight ratio of 70 : 30 and then heated to fabricate a sulfur-carbon composite.

### [Comparative Example 3] Fabrication of Sulfur-carbon Composite

To ensure that the sulfur is contained in the porous carbon material of Comparative Example 1 above, the sulfur and the porous carbon material were mixed in a weight ratio of 60 : 40 and then heated to fabricate a sulfur-carbon composite.

### [Experimental Example 2] Thermogravimetric Analysis (TGA) of Sulfur-carbon composites

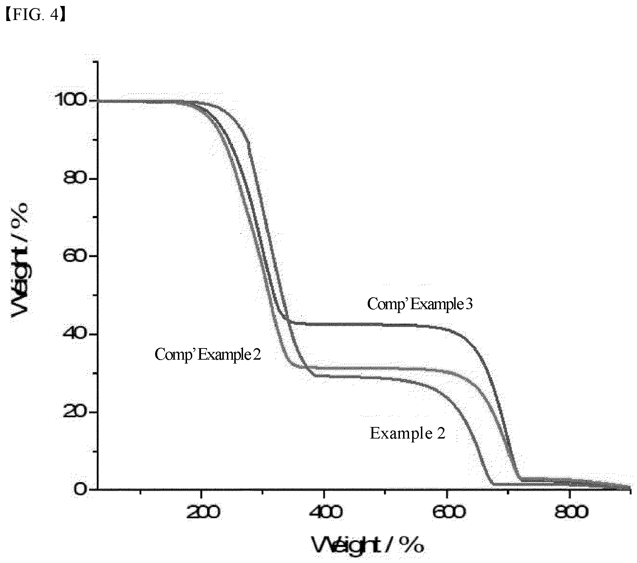

Thermogravimetric analysis (10 °C/min ramping condition (20 °C to 900 °C), air atmosphere) was performed on each of the sulfur-carbon composites fabricated in Example 2, Comparative Example 2, and Comparative Example 3, and the results of observing the respective mass changes are shown in FIG. 4. On the other hand, a thermogravimetric analyzer (manufacture: Mettler Toledo) was used for the thermogravimetric analysis.

FIG. 4 is a thermogravimetric analysis (TGA) graph of a sulfur-carbon composite according to an example and comparative examples of the present invention. Thermogravimetric analysis was performed on each of the sulfur-carbon composites fabricated in Example 2, Comparative Example 2, and Comparative Example 3. As shown in FIG. 4, it can be seen that in Example 2, the volatilization of sulfur occurs at a relatively higher temperature compared to Comparative Example 2 and Comparative Example 3 due to sulfur entrapment in the pores of the carbon material. This indicates that activation treatment of the carbon material increases the sulfur retention efficiency.

### [Example 3] Fabrication of Lithium Secondary Battery

### Fabrication of Positive Electrode

90 parts by weight of the sulfur-carbon composite prepared in Example 2 above as the positive-electrode active material (the sulfur alone content is 63 wt% with respect to the total weight of the positive electrode), 5 parts by weight of denka black as the conductive material, and 5 parts by weight of styrene butadiene rubber/carboxymethyl cellulose (SBR : CMC = 7 : 3) were mixed to prepare a positive electrode slurry composition, and then the above prepared slurry composition was coated on a collector (Al Foil), dried at 50 °C for 12 hours, and pressed with a roll press machine to prepare a positive electrode (wherein the loading amount of sulfur was 3.0 mAh/cm²).

### Fabrication of Electrolyte

First, the sparingly solvating electrolyte (SSE) was fabricated by mixing LiTFSI (concentration: 0.65 M), dimethoxyethane (second solvent), and 1,1,2,2-tetrafluoroethyl 2,2,3,3-tetrafluoropropyl ether (TTE, first solvent) in a molar ratio of 1 : 2 : 9 under room temperature.

### Fabrication of Lithium Secondary Battery

A coin cell type lithium secondary battery was fabricated by placing the above fabricated positive electrode and a 150 µm thick lithium metal negative electrode face to face, interposing a polyethylene (PE) separator therebetween, and injecting the above fabricated sparingly solvating electrolyte (SSE). In the fabrication of the above battery, the positive electrode was used as a 14 phi circular electrode, the polyethylene separator was used as 19 phi, and the lithium metal was used as 16 phi.

### [Comparative Example 4] Fabrication of Lithium Secondary Battery

A lithium secondary battery of the coin cell type was fabricated in the same manner as in Example 3, except that the sulfur-carbon composite used was the one fabricated in Comparative Example 2 instead of that in Example 2. The sulfur content alone was 63% by weight of the total weight of the positive electrode.

### [Comparative Example 5] Fabrication of Lithium Secondary Battery

A lithium secondary battery of the coin cell type was fabricated in the same manner as in Example 3, except that the sulfur-carbon composite used was the one fabricated in Comparative Example 3 instead of that in Example 2 (The sulfur content alone was 54% by weight of the total weight of the positive electrode).

### [Experimental Example 3] Evaluation of Discharge Capacity and Life Characteristics of Lithium Secondary Battery

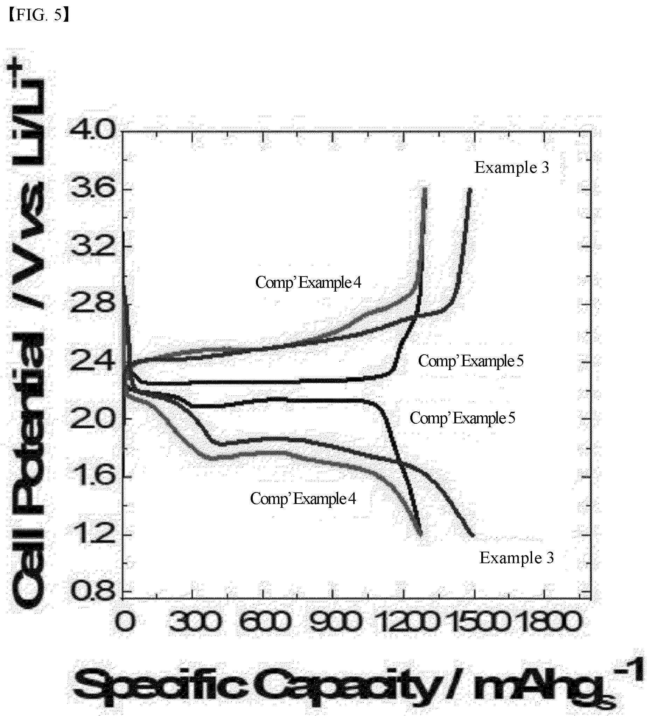

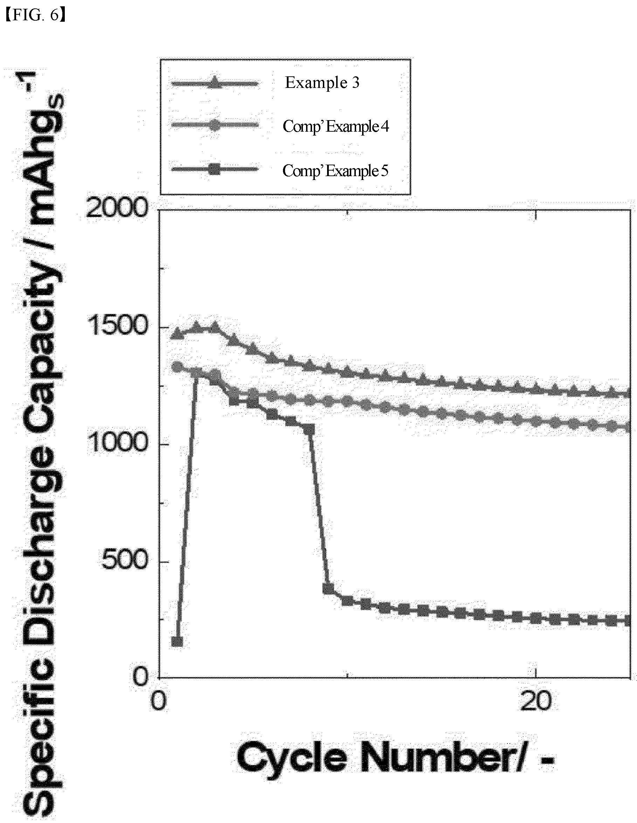

The discharge capacity and life characteristics of the lithium secondary batteries fabricated in Example 3, Comparative Example 4, and Comparative Example 5 were evaluated after conducting 0.1C charging/0.1C discharging for three cycles, followed by 0.2C charging/0.3C discharging. The results of the discharge capacity evaluation are shown in Table 3. The voltage range used for this evaluation was 1.2 to 3.6 V, and the evaluation was conducted at room temperature. FIG. 5 is a graph showing the discharge capacity of the lithium secondary batteries according to the example of the present invention and the comparative examples, and FIG. 6 is a graph showing both the discharge capacity and life characteristics of the lithium secondary batteries according to the example of the present invention and the comparative examples.

**[Table 3]**

| | Sulfur content by total weight of the positive electrode (wt%) | 0.1C 3rd discharge capacity (mAh/g_{sulfur}) |
|---|---|---|
| Example 3 | 63 | 1,439 |
| Comparative Example 4 | 63 | 1,220 |
| Comparative Example 5 | 54 | 1,272 |

Upon measuring the discharge capacity and life of the lithium secondary batteries fabricated in Example 3, Comparative Example 4, and Comparative Example 5, it was found that the battery of Example 3, which includes a carbon material in the sulfur-carbon composite having a specific surface area of more than 1,700 m²/g and a pore volume of more than 5 cm³/g, and simultaneously applies an SSE electrolyte, exhibited a discharge capacity of over 80% of the theoretical capacity despite having a high sulfur content of 63% based on the total weight of the positive electrode, as shown in Table 3, and FIGS. 5 and 6. The life characteristics were also found to be high.

In contrast, the batteries of Comparative Examples 4 and 5, which included a carbon material in the sulfur-carbon composite with a specific surface area of less than 1,700 m²/g and a pore volume of less than 5 cm³/g, although they applied an SSE electrolyte, were found to be inferior in both discharge capacity and life characteristics compared to Example 3, as shown in Table 3, and FIGS. 5 and 6. Particularly in Comparative Example 4, despite having the same high sulfur content of 63% based on the total weight of the positive electrode as Example 3, the high sulfur content adversely affected the cell, leading to significant overvoltage, resulting in decreased discharge capacity and nominal voltage, as well as reduced life characteristics.

## Claims

1. A porous carbon material having a specific surface area of 1,700 m²/g or more and a pore volume of 5 cm³/g or more.

2. The porous carbon material of claim 1, wherein the porous carbon material has a pore volume of 7 cm³/g or more.

3. The porous carbon material of claim 1, wherein the porous carbon material is selected from a group consisting of: carbon nanotubes; graphene (multilayer graphene flake, MGF); graphite; carbon black selected from a group consisting of: carbon black, acetylene black, Ketjen black, Denka black, thermal black, channel black, furnace black, and lamp black; carbon fiber; and mixtures containing two or more thereof.

4. The porous carbon material of claim 3, wherein the porous carbon material is Ketjen black.

5. The porous carbon material of claim 1, wherein the porous carbon material is activation treated.

6. The porous carbon material of claim 1, wherein the porous carbon material is for use as a positive-electrode active material in a lithium secondary battery comprising an electrolyte comprising: a first solvent comprising: a fluorinated ether compound; a second solvent comprising a glyme-based compound; and a lithium salt.

7. A method for fabricating the porous carbon material of claim 1, comprising a step of:
physically activating the carbon material with a gas activator, or chemically activating the carbon material with a chemical activator.

8. The method for fabricating the porous carbon material of claim 7, wherein the carbon material prior to the activation reacts with a gas or chemical to gasify the carbon in a solid phase, resulting in formation of micropores in the carbon material.

9. The method for fabricating the porous carbon material of claim 7, wherein no carbonization process is performed during the physical activation or chemical activation.

10. The method for fabricating the porous carbon material of claim 7, wherein no carbonization process is performed before or after the physical activation or chemical activation.

11. The method for fabricating the porous carbon material of claim 7, wherein the gas activator is selected from a group consisting of: steam, carbon monoxide, carbon dioxide, and oxygen, and the physical activation using the gas activator is conducted at a temperature of 500 to 1,000 °C for 1 to 10 hours.

12. The method for fabricating the porous carbon material of claim 7, wherein the chemical activator is selected from a group consisting of: KOH, K₂CO₃, NaOH, Na₂CO₃, AlCl₃, MgCl₃ and H₃PO₄, and wherein the chemical activation with the chemical activator is performed at a temperature of 400 to 1,000 °C for 1 to 10 hours.

13. The method for fabricating the porous carbon material of claim 7, wherein the ratio of deposition of the carbon material to the chemical activator prior to activation is from 1 : 8 to 1 : 1 by weight.

14. A positive electrode for a lithium secondary battery, comprising:
the sulfur-carbon composite as the positive-electrode active material, wherein the sulfur is retained in the porous carbon material of claim 1.

15. A lithium secondary battery, comprising: the positive electrode for a lithium secondary battery of claim 14; a negative electrode; a separator interposed therebetween; and an electrolyte comprising a first solvent comprising a fluorinated ether compound, a second solvent comprising a glyme-based compound, and a lithium salt.

16. The lithium secondary battery of claim 15, wherein the sulfur contained in the positive electrode is contained in a content of from 60 to 90 percent by weight, relative to a total weight of the positive electrode.

17. The lithium secondary battery of claim 15, wherein a utilization rate of the sulfur contained in the positive electrode is 80% or more of the theoretical discharge capacity.
